# NOUVEAU FASCICULE DE BREVET EUROPEEN

(11) **EP 0 526 323 B2**
(45) Date de publication et mention de la décision concernant l'opposition: **15.11.2000**
(45) Mention de la délivrance du brevet: 15.11.1995
(21) Numéro de dépôt: 92402171.0
(22) Date de dépôt: 28.07.1992
(51) Int. Cl.: F16D 69/02

(54) **Garniture d'embrayage à frottement à sec, sans amiante**
Asbestfreier trockenreibungwirkender Kupplungs-Belag
Asbestos-free, boundary friction, clutch lining

(30) Priorité: 01.08.1991 FR 9109802
(43) Date de publication de la demande: 03.02.1993
(73) Titulaire: VALEO, 75848 Paris Cédex 17 (FR)
(72) Inventeur: Henrion, Philippe, F-87280 Limoges (FR); Boule, Jacques, F-77000 Melun (FR)
(74) Mandataire: Lemaire, Marc

(56) Documents cités:
- EP-A- 0 050 377
- DE-A- 3 035 100
- FR-A- 2 661 473
- GB-A- 601 790
- GB-A- 2 114 586
- JP-A- 1 216 136
- US-A- 4 539 240

## Description

L'invention concerne une garniture d'embrayage à frottement à sec, sans amiante, plus particulièrement pour véhicule automobile.

D'une manière générale, un embrayage de véhicule automobile fonctionnant par frottement à sec, comprend un mécanisme d'embrayage destiné à être monté sur un volant d'inertie formant plateau de réaction.

Le mécanisme d'embrayage comporte lui-même un plateau de pression soumis à l'action axiale d'un système élastique, un diaphragme dans les embrayages modernes.

Plateau de réaction et plateau de pression sont solidaires en rotation entre eux et d'un arbre dit arbre menant qui, de manière générale, est constitué par, ou est en prise avec, le vilebrequin d'un moteur thermique de véhicule.

Un disque de friction d'embrayage, solidaire en rotation d'un arbre, dit arbre mené, est inséré entre le plateau de réaction et le plateau de pression en étant adapté à être serré entre ceux-ci sous l'effet de l'action du diaphragme, de manière à pouvoir transmettre à l'arbre mené le couple de rotation généré par le moteur thermique du véhicule.

Le disque de friction d'embrayage est formé généralement d'un voile comprenant des parties déformables axialement, qui forment un dispositif de progressivité, sur lesquels sont rapportés, de part et d'autre, deux garnitures de friction en forme de couronne.

Le voile est relié à un moyeu lui-même monté sur l'arbre menant, soit directement, soit, plus couramment, par l'intermédiaire d'un dispositif amortisseur de torsion.

Une butée de débrayage est en outre prévue pour assurer les manoeuvres de débrayage et de réembrayage.

Lors d'une manoeuvre de réembrayage, la garniture de friction doit être en mesure de permettre une transmission progressive du couple généré par le moteur thermique, sans à-coups, de manière à assurer non seulement le confort de l'utilisateur, mais aussi pour éviter toute détérioration des éléments constituant une chaîne cinématique entre le moteur thermique et les roues du véhicule automobile.

Ceci est obtenu grâce à l'intervention des éléments de progressivité.

Il en résulte un glissement relatif entre, d'une part, le plateau de réaction et l'une des garnitures du disque de friction et, d'autre part, entre le plateau de pression et l'autre garniture de friction, qui produit inévitablement un échauffement et une usure des garnitures.

On connait notamment par le document US-A-4 539 240 des garnitures d'embrayages, dites organiques, qui comprennent généralement un squelette formé d'au moins un fil retors comprenant des fibres minérales, organiques, au moins un filament métallique dans une proportion pouvant atteindre 45 % du poids du fil et dont la cohésion est assurée par un liant à base de matières organiques.

Ces garnitures sont particulièrement bien adaptées à transmettre progressivement le couple de rotation du moteur thermique, et sans à-coups, lors d'une manoeuvre de réembrayage.

Mais, dans des conditions d'utilisation sévères, correspondant à des manoeuvres de débrayage et de réembrayage fréquentes et à la transmission de couples importants, de telles garnitures ont l'inconvénient de présenter une diminution du coefficient de frottement lorsqu'elles sont amenées à s'échauffer, ainsi que de présenter des dégradations, en particulier au niveau du liant.

On connait par ailleurs des garnitures dites métalliques, réalisées par frittage de métaux en poudre en présence de divers autres constituants.

Ces garnitures ne présentent pas les inconvénients des garnitures organiques précitées, mais elles sont mal adaptées à la transmission progressive du couple de rotation lors d'une manoeuvre de réembrayage.

Elles sont génératrices d'à-coups, nuisant au confort d'utilisation, et sont par ailleurs génératrices de broutements.

La présente invention a pour objet une garniture d'embrayage, sans amiante, exempte des inconvénients des différents types de garnitures connus.

Une garniture d'embrayage à frottement à sec sans amiante, selon l'invention, comporte un squelette formé à partir d'au moins un fil retors comprenant des fibres minérales, éventuellement des fibres organiques, et au moins un filament métallique, et un liant à bases de matières organiques et/ou minérales, caractérisée en ce que la proportion pondérale de filament métallique dans le fil est comprise entre 47 % et 80 % et en ce que les dits filaments sont des filaments de cuivre.

Selon un autre aspect de l'invention, ledit fil comporte également :
- des fibres de verre dans une proportion comprise entre 5 % et 53 %, et, éventuellement
- des fibres organiques telles que, de préférence, du type acrylique dans une proportion pondérale comprise entre 0 % et 50 %.

Selon un autre aspect de l'invention, ledit fil comporte en outre un ciment d'imprégnation.

Selon encore d'autres aspects de l'invention, la proportion pondérale dudit fil dans ladite garniture est comprise entre 30 % et 90 % et de préférence entre 40 % et 80 %.

L'invention sera bien comprise à la lecture des exemples de réalisation ci-après qui feront apparaître d'autres points caractéristiques de l'invention.

### Exemple n° 1

On réalise tout d'abord un fil, de manière usuelle, à partir des composants et proportions pondérales ci-après :

| | |
|---|---|
| - fibres de verre | 17 % |
| - fibres acryliques | 21 % |
| - filament de cuivre | 62 % |

Les fibres de verre et fibres acryliques étant préalablement réunies pour former un fil auquel est ensuite associé un filament (ou fil) de cuivre, au cours d'une opération de retordage.

Le fil retors est imprégné par trempage dans un bain formé d'un solvant dans lequel se trouvent en solution ou en suspension un ciment minéral et/ou organique ainsi que des charges, le fil est ensuite amené à passer dans une filière afin d'ajuster comme désiré la proportion, de ciment dans le fil, avant d'être séché.

Une préforme de garniture est ensuite réalisée en enroulant le fil sur lui-même, de manière à former des lobes. Pour ce faire une buse d'alimentation par laquelle est amené le fil, est animée à la fois d'un mouvement de rotation et d'un mouvement de translation alternativement dans un sens et dans le sens contraire.

La préforme ainsi obtenue qui se présente ainsi sous la forme d'une couronne, subit ensuite une opération de cuisson dans un moule placé entre les plateaux chauffants d'une presse.

Après cette opération de cuisson et un traitement thermique consécutif, on obtient une garniture dont-il ne reste plus qu'à ajuster les dimensions finales par une opération de rectification.

### Exemple n° 2

| | |
|---|---|
| - fibres de verre | 22 % |
| - fibres acryliques | 28 % |
| - filament | 50 % |

### Exemple n° 3

| | |
|---|---|
| - fibres de verre | 11 % |
| - fibres acryliques | 14 % |
| - filament | 75 % |

Des tests et essais effectués sur les garnitures réalisées conformément aux exemples 1 à 3 ci-dessus ont mis en évidence une remarquable stabilité, et à haut niveau, du coefficient de frottement y compris quand l'échauffement de la garniture obtient des valeurs importantes.

De même on a pu remarquer que les garnitures selon l'invention permettent des manoeuvres d'embrayage progressives, sans à-coup ni broutement.

## Revendications

1. Garniture d'embrayage à frottement à sec, sans amiante, comportant un squelette formé à partir d'au moins un fil retors comprenant des fibres minérales, éventuellement des fibres organiques, et au moins un filament métallique, et un liant à bases de matières organiques mou minérales, caractérisée en ce que la proportion pondérale de filament métallique dans le fil est comprise entre 47 % et 80 % et en ce que les dits filaments métalliques sont des filaments de cuivre.

2. Garniture d'embrayage selon la revendication 1, caractérisée en ce que ledit fil comprend entre 5 % et 53 % en poids de fibres de verre et, éventuellement entre 0 % et 50 % de fibres acryliques.

3. Garniture d'embrayage selon l'une quelconque des revendications précédentes, caractérisée en ce que ledit fil est imprégné au moyen d'un ciment organique et/ou minéral.

## Claims

1. An asbestos-free dry friction clutch liner, comprising a skeleton formed from at least one spun yarn including mineral fibres, which may be organic fibres, and at least one metallic filament, with a binder based on organic and/or mineral materials, characterised in that the proportion by weight of metallic filament in the yarn is between 47% and 80%, and in that the said metallic filaments are copper filaments.

2. A friction liner according to Claim 1, characterised in that the said yarn comprises between 5% and 53% by weight of glass fibres, and, optionally, between 0% and 50% of acrylic fibres.

3. A friction liner according to any one of the preceding Claims, characterised in that the said yarn is impregnated with an organic and/or mineral cement.

## Patentansprüche

1. Asbestfreier Kupplungsbelag für eine Trockenreibungskupplung mit einem Gerüst, das durch wenigstens einen Zwirn gebildet wird, der Mineralfasern, gegebenenfalls organische Fasern, und wenigstens einen Metallfaden enthält, und mit einem Bindemittel auf der Basis von organischen und/oder mineralischen Stoffen, **dadurch gekennzeichnet,** daß der Gewichtsanteil des Metallfadens im Zwirn zwischen 47 % und 80 % liegt und daß die besagten Metallfäden Kupferfäden sind.

2. Kupplungsbelag nach Anspruch 1, **dadurch gekennzeichnet,** daß der besagte Zwirn zwischen 5 Gewichts-% und 53 Gewichts-% Glasfasern und gegebenenfalls zwischen 0 % und 50 % Acrylfasern enthält.

3. Kupplungsbelag nach einem der vorangehenden Ansprüche, **dadurch gekennzeichnet,** daß der besagte Zwirn mittels eines organischen und/oder mineralischen Zements imprägniert ist.
